# EUROPEAN PATENT SPECIFICATION

(11) **EP 3 936 563 B1**
(45) Date of publication and mention of the grant of the patent: **10.05.2023**
(21) Application number: 21183207.6
(22) Date of filing: 01.07.2021
(51) Int. Cl.: C08L 9/06, B60C 1/00

(54) **TIRE RUBBER COMPOSITION AND TIRE**
REIFENKAUTSCHUKZUSAMMENSETZUNG UND REIFEN
COMPOSITION DE CAOUTCHOUC DE PNEU ET PNEU

(30) Priority: 10.07.2020 JP 2020119420
(43) Date of publication of application: 12.01.2022
(73) Proprietor: Sumitomo Rubber Industries, Ltd., Kobe-shi, Hyogo-ken 651-0072 (JP)
(72) Inventor: MIKI, Naoyuki, Kobe-shi, 651-0072 (JP)
(74) Representative: Manitz Finsterwald Patent- und Rechtsanwaltspartnerschaft mbB

(56) References cited:
- EP-A1- 3 385 319
- EP-A1- 3 597 695
- WO-A1-2020/100492
- WO-A1-2020/100493
- WO-A1-2020/100495
- JP-A- 2020 100 847
- US-A1- 2018 340 055
- US-A1- 2019 031 864

## Description

### TECHNICAL FIELD

The present invention relates to tire rubber compositions and tires.

### BACKGROUND ART

Tires with various properties have been desired. For safety reasons, grip performance has been emphasized (see, for example, Patent Literature 1). Tread rubber compositions comprising thiuram-based vulcanization accelerators and liquid styrene-butadiene rubber are known from Patent Literature 2 to 6. Patent Literature 7 describes the addition of hydrogenated dicyclopentadiene resins to rubber compositions.

### CITATION LIST

### PATENT LITERATURE

Patent Literature 1: JP 2008-101127 A
Patent Literature 2: WO 2020/100492 A1
Patent Literature 3: WO 2020/100493 A1
Patent Literature 4: WO 2020/100495 A1
Patent Literature 5: EP 3 385 319 A1
Patent Literature 6: US 2019/031864 A1
Patent Literature 7: US 2018/340055 A1

### SUMMARY OF INVENTION

### TECHNICAL PROBLEM

The present inventor has extensively studied and found that although it is conventionally known, for example, to use styrene-butadiene rubber (SBR) having a high glass transition temperature (Tg) to obtain high grip performance, the use of SBR disadvantageously increases temperature dependence, thus increasing the change in performance relative to the change in temperature (i.e., increasing the difference between grip performance at low temperatures and grip performance at high temperatures).

Thus, the conventional techniques still have room for improvement to improve the overall performance in terms of grip performance at low temperatures and grip performance at high temperatures.

The present invention aims to solve the above problem and provide rubber compositions which provide improved overall performance in terms of grip performance at low temperatures and grip performance at high temperatures, as well as tires including the rubber compositions.

### SOLUTION TO PROBLEM

The present invention relates to tire rubber compositions, containing: at least one liquid styrene-butadiene copolymer; at least one hydrogenated dicyclopentadiene resin; and at least one thiuram vulcanization accelerator.

The hydrogenated dicyclopentadiene resin preferably has a degree of hydrogenation of 50 mol% or higher.

The rubber compositions preferably contain at least one styrene-butadiene rubber, and at least one isoprene-based rubber and/or polybutadiene rubber.

The rubber compositions preferably contain at least one styrene resin.

The rubber compositions preferably contain, per 100 parts by mass of at least one rubber component therein, 30 parts by mass or more of at least one carbon black.

The tire rubber compositions are preferably tread rubber compositions.

The present invention also relates to tires, including a tread containing any of the rubber compositions.

### ADVANTAGEOUS EFFECTS OF INVENTION

The present invention provides tire rubber compositions containing at least one liquid styrene-butadiene copolymer, at least one hydrogenated dicyclopentadiene resin, and at least one thiuram vulcanization accelerator. Such tire rubber compositions provide improved overall performance in terms of grip performance at low temperatures and grip performance at high temperatures.

### DESCRIPTION OF EMBODIMENTS

The tire rubber compositions of the present invention contain at least one liquid styrene-butadiene copolymer, at least one hydrogenated dicyclopentadiene resin, and at least one thiuram vulcanization accelerator. Thus, the tire rubber compositions provide improved overall performance in terms of grip performance at low temperatures and grip performance at high temperatures.

Herein, grip performance at low temperatures and grip performance at high temperatures may also be collectively referred to as grip performance.

The reason for this advantageous effect is not exactly clear, but is believed to be as follows.

The studies of the present inventor have revealed that although it has been conventional to combine SBR with phenol resins, the combined use of SBR and phenol resins tends to enhance grip performance in high temperature regions (grip performance at high temperatures) but to reduce grip performance in low temperature regions (grip performance at low temperatures) because the styrene moiety of the polymers and the phenol resins are compatible and interact with each other, so that the rubber compound hardens in low temperature regions and also the tan δ decreases in low temperature regions.

In contrast, the present invention uses a combination of a liquid styrene-butadiene copolymer and a hydrogenated DCPD resin in a rubber composition containing a thiuram vulcanization accelerator to enhance grip performance in high temperature regions (high-temperature tan δ value, grip performance at high temperatures). Moreover, since the rubber components are immiscible (incompatible) with the hydrogenated DCPD resin, the flexibility of the rubber compound in low temperature regions is not impaired, and good grip performance at low temperatures is also obtained.

If an unhydrogenated DCPD resin is used instead of the hydrogenated DCPD resin, abrasion resistance tends to be impaired, resulting in a failure to sufficiently improve the overall performance in terms of grip performance at low temperatures and grip performance at high temperatures.

Moreover, the overall performance in terms of grip performance at low temperatures and grip performance at high temperatures may be synergistically improved by the use of a combination of a liquid styrene-butadiene copolymer and a hydrogenated DCPD resin in a rubber composition containing a thiuram vulcanization accelerator.

Examples of rubber components that may be used in the present rubber compositions include diene rubbers such as isoprene-based rubbers, polybutadiene rubbers (BR), styrene-butadiene rubbers (SBR), styrene-isoprene-butadiene rubbers (SIBR), acrylonitrile-butadiene rubbers (NBR), chloroprene rubbers (CR), and butyl rubbers (IIR). These rubber components may be used alone or in combinations of two or more. Diene rubbers are preferred among these, with isoprene-based rubbers, BR, and SBR being more preferred, with combinations of SBR with isoprene-based rubbers and/or BR being still more preferred.

The rubber components include rubbers preferably having a weight average molecular weight (Mw) of 150,000 or more, more preferably 350,000 or more. Although the upper limit of the Mw is not limited, it is preferably 4,000,000 or less, more preferably 3,000,000 or less.

Any SBR may be used, and examples include those commonly used in the tire industry, such as emulsion-polymerized SBR (E-SBR) and solution-polymerized SBR (S-SBR). These may be used alone or in combinations of two or more.

The styrene content of the SBR is preferably 10% by mass or higher, more preferably 15% by mass or higher, still more preferably 20% by mass or higher, particularly preferably 25% by mass or higher, most preferably 30% by mass or higher, further most preferably 35% by mass or higher. The styrene content is also preferably 65% by mass or lower, more preferably 50% by mass or lower, still more preferably 45% by mass or lower. When the styrene content is within the range indicated above, particularly when the styrene content is increased (to at least a predetermined value), the advantageous effect tends to be more suitably achieved.

The vinyl content of the SBR is preferably 10% by mass or higher, more preferably 15% by mass or higher, but is preferably 70% by mass or lower, more preferably 60% by mass or lower, still more preferably 50% by mass or lower, particularly preferably 45% by mass or lower. When the vinyl content is within the range indicated above, the advantageous effect tends to be more suitably achieved.

The SBR may be either unmodified or modified SBR.

The modified SBR may be any SBR having a functional group interactive with a filler such as silica. Examples include a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); and a chain end-modified SBR that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups are preferred among these.

SBR products manufactured or sold by Sumitomo Chemical Co., Ltd., JSR Corporation, Asahi Kasei Corporation, Zeon Corporation, etc. may be used as the SBR.

The amount of the SBR, if present, based on 100% by mass of the rubber components is preferably 20% by mass or more, more preferably 50% by mass or more, still more preferably 65% by mass or more, and may be 100% by mass. Although the upper limit is not limited, it is preferably 90% by mass or less, more preferably 80% by mass or less, still more preferably 75% by mass or less. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). Tin-modified polybutadiene rubbers (tin-modified BR) may also be used which has been modified with tin compounds. These may be used alone or in combinations of two or more.

The cis content of the BR is preferably 80% by mass or higher, more preferably 90% by mass or higher, still more preferably 95% by mass or higher, particularly preferably 97% by mass or higher, and may be 100% by mass. When the cis content is within the range indicated above, the advantageous effect tends to be more suitably achieved.

Moreover, the BR may be either unmodified or modified BR. Examples of the modified BR include those into which functional groups as listed for the modified SBR are introduced. Preferred embodiments are as described for the modified SBR.

The BR may be commercially available from Ube Industries, Ltd., JSR Corporation, Asahi Kasei Corporation, Zeon Corporation, etc.

The amount of the BR, if present, based on 100% by mass of the rubber components is preferably 10% by mass or more, more preferably 20% by mass or more, still more preferably 25% by mass or more. The upper limit is preferably 50% by mass or less, more preferably 40% by mass or less, still more preferably 35% by mass or less. When the amount is within the range indicated above, the advantageous effect tends to be more suitably achieved.

Examples of the isoprene-based rubbers include natural rubbers (NR), polyisoprene rubbers (IR), refined NR, modified NR, and modified IR. The NR may be ones commonly used in the tire industry, such as SIR20, RSS#3, or TSR20. Any IR may be used, and examples include those commonly used in the tire industry, such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of the isoprene-based rubbers, if present, based on 100% by mass of the rubber components is preferably 10% by mass or more, more preferably 20% by mass or more, still more preferably 25% by mass or more. The upper limit is preferably 50% by mass or less, more preferably 40% by mass or less, still more preferably 35% by mass or less. When the amount is within the range indicated above, the advantageous effect tends to be more suitably achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and the vinyl content (1,2-butadiene unit content) can be determined by infrared absorption spectrometry. The styrene content can be determined by ¹H-NMR analysis.

The rubber compositions contain one or more liquid styrene-butadiene copolymers. The term "liquid styrene-butadiene copolymers" refers to copolymers of styrene and butadiene which are liquid at room temperature (25°C). The liquid styrene-butadiene copolymers, which are liquid at room temperature, usually function as plasticizers.

The number average molecular weight (Mn) of the liquid styrene-butadiene copolymers is preferably 1,000 or more, more preferably 3,000 or more, but is preferably 100,000 or less, more preferably 15,000 or less, as determined by gel permeation chromatography (GPC) calibrated with polystyrene standards. When the Mn is within the range indicated above, the advantageous effect tends to be more suitably achieved.

Herein, the Mn of the liquid diene polymers such as liquid styrene-butadiene copolymers is determined by gel permeation chromatography (GPC) calibrated with polystyrene standards.

The styrene content of the liquid styrene-butadiene copolymers is preferably 5% by mass or higher, more preferably 10% by mass or higher, still more preferably 150 by mass or higher, particularly preferably 20% by mass or higher, but is preferably 70% by mass or lower, more preferably 60% by mass or lower, still more preferably 50% by mass or lower, particularly preferably 40% by mass or lower, most preferably 30% by mass or lower. When the styrene content is within the range indicated above, the advantageous effect tends to be more suitably achieved.

The vinyl content of the liquid styrene-butadiene copolymers is preferably 2% by mass or higher, more preferably 5% by mass or higher, still more preferably 20% by mass or higher, particularly preferably 40% by mass or higher, most preferably 50% by mass or higher, but is preferably 90% by mass or lower, more preferably 80% by mass or lower, still more preferably 70% by mass or lower. When the vinyl content is within the range indicated above, the advantageous effect tends to be more suitably achieved.

The amount of the liquid styrene-butadiene copolymers per 100 parts by mass of the rubber components is preferably 5 parts by mass or more, more preferably 10 parts by mass or more, still more preferably 15 parts by mass or more, particularly preferably 20 parts by mass or more. The amount is also preferably 70 parts by mass or less, more preferably 60 parts by mass or less, still more preferably 50 parts by mass or less, particularly preferably 45 parts by mass or less. When the amount is within the range indicated above, the advantageous effect tends to be more suitably achieved.

The rubber compositions may contain plasticizers other than the liquid styrene-butadiene copolymers.

Examples include liquid diene polymers other than the liquid styrene-butadiene copolymers. Specific examples include liquid polybutadiene polymers, liquid polyisoprene polymers, and liquid styrene-isoprene copolymers. These may be used alone or in combinations of two or more. The liquid diene polymers other than the liquid styrene-butadiene copolymers preferably have a number average molecular weight (Mn) within the same range as described for the liquid styrene-butadiene copolymers.

The liquid diene polymers may be commercially available from Sartomer, Kuraray Co., Ltd., etc.

Other examples of the plasticizers include oils and liquid resins. The above-mentioned plasticizers (materials which are liquid at room temperature (25°C) and have a plasticizing effect, including, for example, liquid diene polymers such as liquid styrene-butadiene copolymers, oils, and liquid resins) may be used alone or in combinations of two or more.

From an environmental standpoint, the plasticizers preferably have a polycyclic aromatic content (PCA) of lower than 3% by mass, more preferably lower than 1% by mass. The polycyclic aromatic content (PCA) is measured in accordance with the Institute of Petroleum (UK) 346/92 method.

Any oil may be used, and examples include conventional oils, for example: process oils such as paraffinic process oils, aromatic process oils, and naphthenic process oils; low PCA (polycyclic aromatic) process oils such as TDAE and MES; plant oils; and mixtures thereof. These may be used alone or in combinations of two or more. Aromatic process oils are preferred among these. Specific examples of the aromatic process oils include Diana Process Oil AH series available from Idemitsu Kosan Co., Ltd.

The oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Any liquid resin (resin that is liquid at room temperature (25°C)) may be used, and examples include liquid aromatic vinyl polymers, coumarone-indene resins, indene resins, terpene resins, and rosin resins, and hydrogenated products of the foregoing. These may be used alone or in combinations of two or more.

The liquid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The total amount of the plasticizers per 100 parts by mass of the rubber components is preferably 10 parts by mass or more, more preferably 30 parts by mass or more, still more preferably 40 parts by mass or more, particularly preferably 50 parts by mass or more. The total amount is also preferably 150 parts by mass or less, more preferably 100 parts by mass or less, still more preferably 80 parts by mass or less, particularly preferably 70 parts by mass or less. When the total amount is within the range indicated above, the advantageous effect tends to be more suitably achieved.

The amount of the plasticizers includes the amount of the oils contained in the rubbers (oil extended rubbers), if used.

The rubber compositions contain one or more hydrogenated dicyclopentadiene resins.

Herein, the term "hydrogenated dicyclopentadiene resins" refers to dicyclopentadiene resins which have been hydrogenated. These may be used alone or in combinations of two or more.

Herein, the term "dicyclopentadiene resins" refers to resins containing dicyclopentadiene as a main monomer component of the backbone (main chain) of the resins. The amount of the unit derived from dicyclopentadiene based on 100% by mass of the resins is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effect tends to be more suitably achieved.

Examples of the dicyclopentadiene resins include petroleum resins made mainly from dicyclopentadiene produced by dimerization of cyclopentadiene extracted from the C5 fraction of petroleum.

The hydrogenation may be performed by known methods. Exemplary suitable methods include metal-catalyzed catalytic hydrogenation and hydrazine-based hydrogenation (for example, JP S59-161415 A, which is incorporated herein by reference). For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. Each of these organic solvents may be used alone, or two or more of these may be used in admixture. Suitable examples of the metal catalyst include palladium, platinum, rhodium, ruthenium, and nickel. Each of these metal catalysts may be used alone, or two or more of these may be used in admixture. The pressure to be applied is preferably 1 to 300 kgf/cm², for example.

The degree of hydrogenation (hydrogenation degree) of double bonds of the hydrogenated dicyclopentadiene resins is preferably 20 mol% or higher, more preferably 35 mol% or higher, still more preferably 50 mol% or higher, particularly preferably 65 mol% or higher, most preferably 80 mol% or higher, further most preferably 90 mol% or higher, even most preferably 100 mol%. When the degree of hydrogenation is within the range indicated above, the advantageous effect tends to be more suitably achieved.

Herein, the degree of hydrogenation (hydrogenation degree) can be calculated from the rate of decrease in the double bond signals in the ¹H-NMR spectrum measured. Herein, the term "degree of hydrogenation (hydrogenation degree)" refers to the degree of hydrogenation of double bonds.

The softening point of the hydrogenated dicyclopentadiene resins is preferably 60 to 200°C. The upper limit is more preferably 160°C or lower, still more preferably 150°C or lower, while the lower limit is more preferably 80°C or higher, still more preferably 100°C or higher. When the softening point is within the range indicated above, the advantageous effect tends to be more suitably achieved.

Herein, the softening point of the resins is determined in accordance with JIS K 6220-1:2001 using a ring and ball softening point measuring apparatus and defined as the temperature at which the ball drops down.

The hydrogenated dicyclopentadiene resins may be commercially available from ENEOS Corporation, Maruzen Petrochemical Co., Ltd., etc.

The amount of the hydrogenated dicyclopentadiene resins per 100 parts by mass of the rubber components is preferably 5 parts by mass or more, more preferably 10 parts by mass or more, still more preferably 15 parts by mass or more, particularly preferably 20 parts by mass or more, most preferably 25 parts by mass or more. The amount of the hydrogenated dicyclopentadiene resins is preferably 80 parts by mass or less, more preferably 60 parts by mass or less, still more preferably 50 parts by mass or less, particularly preferably 45 parts by mass or less. When the amount is within the range indicated above, the advantageous effect tends to be more suitably achieved.

The rubber compositions may contain resins other than the hydrogenated dicyclopentadiene resins.

Any resin other than the hydrogenated dicyclopentadiene resins may be used, and examples include solid styrene resins, alkylphenol resins, coumarone-indene resins, terpene resins, rosin resins, acrylic resins, and unhydrogenated dicyclopentadiene resins. These may be used alone or in combinations of two or more. Styrene resins are preferred among these. For example, when a hydrogenated dicyclopentadiene resin and a styrene resin are incorporated into a rubber composition containing SBR, the advantageous effect tends to be more suitably achieved. This is believed to be because grip performance in low temperature regions is enhanced by the SBR and the styrene resin being compatible with each other, while grip performance in high temperature regions is enhanced by the dicyclopentadiene resin, since the styrene resin and the dicyclopentadiene resin individually act in the respective temperature regions due to the low compatibility between these resins.

The resins other than the hydrogenated dicyclopentadiene resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The term "styrene resins" refers to polymers formed from styrenic monomers as structural monomers. Examples include polymers produced by polymerization of styrenic monomers as main components (at least 50% by mass, preferably at least 80% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers produced by copolymerization of two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

In particular, α-methylstyrene resins (e.g., α-methylstyrene homopolymers, copolymers of α-methylstyrene and styrene) are preferred, and copolymers of α-methylstyrene and styrene are more preferred.

The softening point of the styrene resins is preferably 60 to 200°C. The upper limit is more preferably 160°C or lower, still more preferably 140°C or lower, particularly preferably 120°C or lower, most preferably 100°C or lower, while the lower limit is more preferably 70°C or higher, still more preferably 80°C or higher. When the softening point is within the range indicated above, the advantageous effect tends to be more suitably achieved.

The amount of the styrene resins, if present, per 100 parts by mass of the rubber components is preferably 5 parts by mass or more, more preferably 10 parts by mass or more, still more preferably 15 parts by mass or more. The amount of the styrene resins is preferably 60 parts by mass or less, more preferably 40 parts by mass or less, still more preferably 30 parts by mass or less. When the amount is within the range indicated above, the advantageous effect tends to be more suitably achieved.

The rubber compositions contain one or more thiuram vulcanization accelerators.

Examples of the thiuram vulcanization accelerators include compounds represented by the following formula (I): 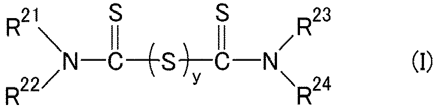 wherein y represents an integer of 1 or larger, R²¹ to R²⁴ are the same as or different from one another and each represent a C1-C30 hydrocarbyl group, and R²¹ and R²², or R²³ and R²⁴ may be joined together to form a ring structure.

In formula (I), R²¹ to R²⁴ are the same as or different from one another and each represent a C1-C30, preferably C1-C15, more preferably C1-C10 hydrocarbyl group. Examples of the hydrocarbyl group include alkyl groups such as methyl, ethyl, propyl, butyl, pentyl, hexyl, heptyl, and octyl groups; cycloalkyl groups such as cyclopentyl and cyclohexyl groups; aryl groups such as phenyl, tolyl, and xylyl groups; aralkyl groups such as benzyl and phenethyl groups; and alkenyl groups such as vinyl, allyl, butenyl, pentenyl, and hexenyl groups.

In formula (I), y represents an integer of 1 or larger, preferably 1 to 10, more preferably 2 to 4.

Examples of the thiuram vulcanization accelerators of formula (I) include tetrabenzylthiuram disulfide (TBzTD), tetramethylthiuram disulfide (TMTD), tetraethylthiuram disulfide, tetramethylthiuram monosulfide (TMTM), dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and tetrakis(2-ethylhexyl)thiuram disulfide. These may be used alone or in combinations of two or more. From the standpoint of the advantageous effect, tetrakis(2-ethylhexyl)thiuram disulfide or tetrabenzylthiuram disulfide (TBzTD) is preferred among these.

The amount of the thiuram vulcanization accelerators per 100 parts by mass of the rubber components is preferably 0.5 parts by mass or more, more preferably 2.0 parts by mass or more, still more preferably 3.0 parts by mass or more, particularly preferably 4.0 parts by mass or more. The amount of the thiuram vulcanization accelerators is preferably 10.0 parts by mass or less, more preferably 9.0 parts by mass or less, still more preferably 8.0 parts by mass or less, particularly preferably 7.0 parts by mass or less. When the liquid styrene-butadiene copolymers and hydrogenated DCPD resins are added to a composition containing the above-mentioned amount of the thiuram vulcanization accelerators, the advantageous effect tends to be more suitably achieved.

The rubber compositions preferably contain one or more types of carbon black as filler (reinforcing filler).

Examples of the carbon black include N134, N110, N220, N234, N219, N339, N330, N326, N351, N550, and N762. These may be used alone or in combinations of two or more.

The nitrogen adsorption specific surface area (N₂SA) of the carbon black is preferably 80 m²/g or more, more preferably 120 m²/g or more, still more preferably 130 m²/g or more. The N₂SA is also preferably 450 m²/g or less, more preferably 400 m²/g or less, still more preferably 200 m²/g or less, particularly preferably 170 m²/g or less, most preferably 155 m²/g or less. When the N₂SA is within the range indicated above, the advantageous effect tends to be more suitably achieved.

The nitrogen adsorption specific surface area of the carbon black can be measured in accordance with JIS K6217-2:2001.

The dibutyl phthalate oil absorption (DBP) of the carbon black is preferably 50 mL/100 g or more, more preferably 100 mL/100 g or more. The DBP is also preferably 200 mL/100 g or less, more preferably 135 mL/100 g or less. When the DBP is within the range indicated above, the advantageous effect tends to be more suitably achieved.

The DBP of the carbon black can be measured in accordance with JIS-K6217-4:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black, if present, per 100 parts by mass of the rubber components is preferably 30 parts by mass or more, more preferably 60 parts by mass or more, still more preferably 80 parts by mass or more, particularly preferably 90 parts by mass or more, most preferably 100 parts by mass or more. The amount is preferably 300 parts by mass or less, more preferably 250 parts by mass or less, still more preferably 200 parts by mass or less, particularly preferably 150 parts by mass or less, most preferably 120 parts by mass or less. When the amount is within the range indicated above, particularly when the amount of the carbon black is increased (to at least a predetermined value), the advantageous effect tends to be more suitably achieved. In other words, when a relatively large amount of carbon black is incorporated into a rubber composition that contains a liquid styrene-butadiene copolymer, a hydrogenated dicyclopentadiene resin, and a thiuram vulcanization accelerator, the advantageous effect tends to be more suitably achieved.

The rubber compositions may contain one or more types of silica as filler (reinforcing filler).

Any silica may be used, and examples include dry silica (anhydrous silicic acid) and wet silica (hydrous silicic acid). These may be used alone or in combinations of two or more. Wet silica is preferred among these because it has a large number of silanol groups.

The silica may be commercially available from Degussa, Rhodia, Tosoh Silica Corporation, Solvay Japan, Tokuyama Corporation, etc.

The N₂SA of the silica is preferably 50 m²/g or more, more preferably 150 m²/g or more. The N₂SA is also preferably 300 m²/g or less, more preferably 200 m²/g or less.

The N₂SA of the silica can be measured in accordance with ASTM D3037-81.

The amount of the silica, if present, per 100 parts by mass of the rubber components is preferably 5 parts by mass or more. The amount is preferably 30 parts by mass or less, more preferably 20 parts by mass or less, still more preferably 5 parts by mass or less.

When the rubber compositions contain silica, they preferably contain one or more silane coupling agents together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more.

The silane coupling agents may be commercially available from Degussa, Momentive, Shin-Etsu Silicone, Tokyo Chemical Industry Co., Ltd., AZmax. Co., Dow Corning Toray Co., Ltd., etc.

The amount of the silane coupling agents, if present, per 100 parts by mass of the silica is preferably 0.1 parts by mass or more, more preferably 2 parts by mass or more, still more preferably 3 parts by mass or more. The amount is also preferably 20 parts by mass or less, more preferably 16 parts by mass or less, still more preferably 12 parts by mass or less.

Examples of fillers (reinforcing fillers) other than the carbon black and silica which may be used include calcium carbonate, mica such as sericite, magnesium oxide, magnesium hydroxide, clay, talc, and titanium oxide. These may be used alone or in combinations of two or more.

The percentage of the carbon black based on 100% by mass of the fillers (reinforcing fillers) in the rubber compositions is preferably 80% by mass or more, more preferably 90% by mass or more, still more preferably 95% by mass or more. The upper limit is not limited and may be 100% by mass. When the percentage is within the range indicated above, the advantageous effect tends to be more suitably achieved.

The rubber compositions preferably contain one or more types of sulfur as crosslinking agents (vulcanizing agents).

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc.

The amount of the sulfur, if present, per 100 parts by mass of the rubber components is preferably 0.1 parts by mass or more, more preferably 0.2 parts by mass or more, still more preferably 0.3 parts by mass or more, particularly preferably 0.4 parts by mass or more, but is preferably 5 parts by mass or less, more preferably 3 parts by mass or less, still more preferably 2 parts by mass or less, particularly preferably 1.5 parts by mass or less. When the amount is within the range indicated above, the advantageous effect tends to be better achieved.

The rubber compositions preferably contain vulcanization accelerators other than the thiuram vulcanization accelerators.

Examples of the vulcanization accelerators other than the thiuram vulcanization accelerators include thiazole vulcanization accelerators such as 2-mercaptobenzothiazole and di-2-benzothiazolyl disulfide; sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. The thiuram vulcanization accelerators are preferably used with sulfenamide vulcanization accelerators, among others.

The vulcanization accelerators may be commercially available from Kawaguchi Chemical Industry Co., Ltd., Ouchi Shinko Chemical Industrial Co., Ltd., Rhein Chemie, etc.

The amount of the vulcanization accelerators other than the thiuram vulcanization accelerators, if present, per 100 parts by mass of the rubber components is preferably 1 part by mass or more, more preferably 2 parts by mass or more, still more preferably 3 parts by mass or more, particularly preferably 5 parts by mass or more, most preferably 8 parts by mass or more, but is preferably 20 parts by mass or less, more preferably 17 parts by mass or less, still more preferably 15 parts by mass or less, particularly preferably 13 parts by mass or less. When the amount is within the range indicated above, the advantageous effect tends to be better achieved.

The rubber compositions preferably contain one or more types of stearic acid.

The stearic acid may be conventional ones, e.g., available from NOF Corporation, Kao Corporation, FUJIFILM Wako Pure Chemical Corporation, or Chiba Fatty Acid Co., Ltd.

The amount of the stearic acid, if present, per 100 parts by mass of the rubber components is preferably 0.5 parts by mass or more, more preferably 1 part by mass or more. The amount is also preferably 5 parts by mass or less, more preferably 3 parts by mass or less, still more preferably 2.5 parts by mass or less. When the amount is within the range indicated above, the advantageous effect tends to be more suitably achieved.

The rubber compositions may contain one or more types of zinc oxide.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide, if present, per 100 parts by mass of the rubber components is preferably 7 parts by mass or less, more preferably 6 parts by mass or less, still more preferably 5 parts by mass or less, particularly preferably 3 parts by mass or less, most preferably 1 part by mass or less, further preferably 0.1 parts by mass or less, further preferably 0 parts by mass. When the amount is within the range indicated above, the advantageous effect tends to be better achieved.

The rubber compositions preferably contain (preferably instead of zinc oxide) one or more zinc dithiophosphates represented by the following formula (1): 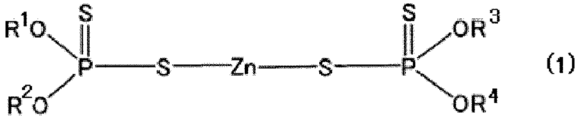 wherein R¹ to R⁴ each independently represent a C1-C18 linear or branched alkyl group or a C5-C12 cycloalkyl group.

Examples of the C1-C18 linear or branched alkyl group represented by R¹ to R⁴ in formula (1) include methyl, ethyl, n-propyl, iso-propyl, n-butyl, 4-methylpentyl, 2-ethylhexyl, octyl, and octadecyl groups, while examples of the cycloalkyl group include cyclopentyl, cyclohexyl, and cyclooctyl groups. For high dispersibility in the rubber compositions and easy production, R¹ to R⁴ are each preferably a C2-C8 linear or branched alkyl group, more preferably a n-butyl group, a n-propyl group, an iso-propyl group, or a n-octyl group, still more preferably a n-butyl group.

The zinc dithiophosphates may be used alone or in combinations of two or more. The zinc dithiophosphates may be commercially available from Rhein Chemie, etc.

The amount (amount of active components) of the zinc dithiophosphates, if present, per 100 parts by mass of the rubber components is preferably 0.1 parts by mass or more, more preferably 1 part by mass or more, still more preferably 1.5 parts by mass or more, but is preferably 10 parts by mass or less, more preferably 5 parts by mass or less, still more preferably 3 parts by mass or less. When the amount is within the range indicated above, the advantageous effect tends to be better achieved.

The rubber compositions may contain one or more antioxidants.

Examples of the antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and/or quinoline antioxidants, with combinations of p-phenylenediamine and quinoline antioxidants being more preferred.

The antioxidants may be commercially available from Seiko Chemical Co., Ltd., Sumitomo Chemical Co., Ltd., Ouchi Shinko Chemical Industrial Co., Ltd., Flexsys, etc.

The amount of the antioxidants, if present, per 100 parts by mass of the rubber components is preferably 0.5 parts by mass or more, more preferably 1 part by mass or more, still more preferably 5 parts by mass or more, but is preferably 10 parts by mass or less, more preferably 8 parts by mass or less. When the amount is within the range indicated above, the advantageous effect tends to be better achieved.

The rubber compositions may contain one or more waxes.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

The waxes may be commercially available from Ouchi Shinko Chemical Industrial Co., Ltd., Nippon Seiro Co., Ltd., Seiko Chemical Co., Ltd., etc.

The amount of the waxes, if present, per 100 parts by mass of the rubber components is preferably 0.5 parts by mass or more, more preferably 1 part by mass or more. The amount is also preferably 10 parts by mass or less, more preferably 7 parts by mass or less.

In addition to the above-mentioned components, the rubber compositions may contain additives commonly used in the tire industry, such as vulcanizing agents other than sulfur (for example, organic peroxides). The amount of each of such components per 100 parts by mass of the rubber components is preferably 0.1 parts by mass or more, but preferably 200 parts by mass or less.

The rubber compositions may be prepared, for example, by kneading the components using a rubber kneading machine such as an open roll mill or a Banbury mixer, and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Moreover, the compositions obtained after kneading vulcanizing agents and vulcanization accelerators are usually vulcanized by press vulcanization, for example. The vulcanization temperature is usually 140 to 190°C, preferably 150 to 185°C.

The rubber compositions can be used in various tire components (i.e., as tire rubber compositions) such as treads (cap treads), sidewalls, base treads, undertreads, clinches, bead apexes, breaker cushion rubbers, rubbers for carcass cord topping, insulations, chafers, and innerliners, and side reinforcement layers of run-flat tires. The rubber compositions are suitable for use in treads, among others.

The tires of the present invention can be produced from the above-described rubber compositions by usual methods. Specifically, an unvulcanized rubber composition containing additives as needed may be extruded into the shape of a tire component (in particular, a tread (cap tread)) and then formed and assembled with other tire components in a usual manner in a tire building machine to build an unvulcanized tire, which may then be heated and pressurized in a vulcanizer to produce a tire.

The treads of the tires may at least partially or fully include the respective above-described rubber compositions.

Non-limiting examples of the tires include pneumatic tires, solid tires, and airless tires. Pneumatic tires are preferred among these.

The tires may be suitably used as tires for passenger vehicles, large passenger vehicles, large SUVs, trucks and buses, or two-wheeled vehicles, racing tires, studless winter tires, cold weather tires, all-season tires, run-flat tires, aircraft tires, mining tires, or other types of tires.

### EXAMPLES

The present invention is specifically described with reference to, but not limited to, examples.

The chemicals used in the examples and comparative examples are listed below.
SBR: HP755B available from JSR Corporation (S-SBR, oil extended (oil content: 37.5 parts by mass per 100 parts by mass of rubber solids), styrene content: 40% by mass, vinyl content: 39% by mass)
NR: TSR20
BR: BR150B available from Ube Industries, Ltd. (cis content: 97% by mass)
Hydrogenated DCPD 1: T-REZ OP501 available from ENEOS Corporation (hydrogenated DCPD resin, degree of hydrogenation: 100 mol%, softening point: 140°C)
Hydrogenated DCPD 2: trial product (hydrogenated DCPD resin, degree of hydrogenation: 60 mol%, softening point: 140°C)
Hydrogenated DCPD 3: trial product (hydrogenated DCPD resin, degree of hydrogenation: 30 mol%, softening point: 140°C)
Unhydrogenated DCPD: DCPD resin available from Tokyo Chemical Industry Co., Ltd. (Product Code DO443, unhydrogenated DCPD resin, degree of hydrogenation: 0 mol%)
Alkylphenol resin: Koresin available from BASF (p-t-butylphenol acetylene resin, condensed resin of p-t-butylphenol and acetylene, softening point: 145°C)
Styrene resin: Sylvatraxx4401 available from Arizona Chemical (copolymer of α-methylstyrene and styrene, softening point: 85°C)
Liquid styrene-butadiene copolymer 1: styrene content: 40% by mass, vinyl content: 50% by mass, Mn: 4,500
Liquid styrene-butadiene copolymer 2: styrene content: 60% by mass, vinyl content: 30% by mass, Mn: 4,500
Liquid styrene-butadiene copolymer 3: ricon 100 available from Cray Valley (styrene content: 20% by mass, vinyl content: 60% by mass, Mn: 4,500)
Oil: aromatic process oil available from H&R (TDAE oil, Vivatec 500)
Carbon black: Seast 9 SAF available from Tokai Carbon Co., Ltd. (N₂SA: 142 m²/g, DBP: 115 ml/100 g)
Stearic acid: stearic acid "TSUBAKI" available from NOF Corporation
Antioxidant 1: NOCRAC 6C available from Ouchi Shinko Chemical Industrial Co., Ltd. (N-(1,3-dimethylbutyl)-N'- phenyl-p-phenylenediamine)
Antioxidant 2: NOCRAC 224 available from Ouchi Shinko Chemical Industrial Co., Ltd. (2,2,4-trimethyl-1,2-dihydroquinoline polymer)
Sulfenamide vulcanization accelerator: NOCCELER CZ available from Ouchi Shinko Chemical Industrial Co., Ltd. (N-cyclohexyl-2-benzothiazolylsulfenamide)
Thiuram vulcanization accelerator 1: NOCCELER TOT-N available from Ouchi Shinko Chemical Industrial Co., Ltd. (tetrakis(2-ethylhexyl)thiuram disulfide, thiuram vulcanization accelerator of formula (I))
Thiuram vulcanization accelerator 2: SANCELER TBZTD available from Sanshin Chemical Industry Co., Ltd. (tetrabenzylthiuram disulfide, thiuram vulcanization accelerator of formula (I) wherein R²¹ to R²⁴ are benzyl groups, and y is 2)
Guanidine vulcanization accelerator: NOCCELER D available from Ouchi Shinko Chemical Industrial Co., Ltd. (1,3-diphenylguanidine)
Zinc dithiophosphate: TP-50 available from Rhein Chemie (zinc dithiophosphate/polymer mixture, compound of formula (1) wherein R¹ to R⁴ are n-butyl groups, active component content: 50% by mass)
Sulfur: HK-200-5 available from Hosoi Chemical Industry Co., Ltd. (5% oil-containing sulfur)

### (Examples and Comparative Examples)

The chemicals other than the sulfur and vulcanization accelerators in the amounts shown in each table were kneaded in a Banbury mixer at 165°C for four minutes to give a kneaded mixture. Then, the kneaded mixture was kneaded with the sulfur and vulcanization accelerators in an open roll mill at 80°C for four minutes to give an unvulcanized rubber composition.

The unvulcanized rubber composition was then formed into the shape of a tread and assembled with other tire components to build a tire, followed by press vulcanization at 170°C for 15 minutes to prepare a test kart tire (tire size: 11×7.10-5).

The test kart tires prepared as above were evaluated as described below. Tables show the results. It should be noted that Comparative Examples 1-1 and 2-1 are used as standards of comparison in Tables 1 and 2, respectively.

### <Grip performance>

A test driver drove a kart on which the test kart tires were mounted five laps around a circuit track of about 5 km per lap and then subjectively evaluated the grip performance. A higher index indicates better grip performance. The grip performance at low temperatures was evaluated at a road surface temperature of 15°C, and the grip performance at high temperatures was evaluated at a road surface temperature of 30°C. The grip performance at high temperatures was rated as good if the index was 60 or higher.

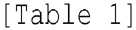

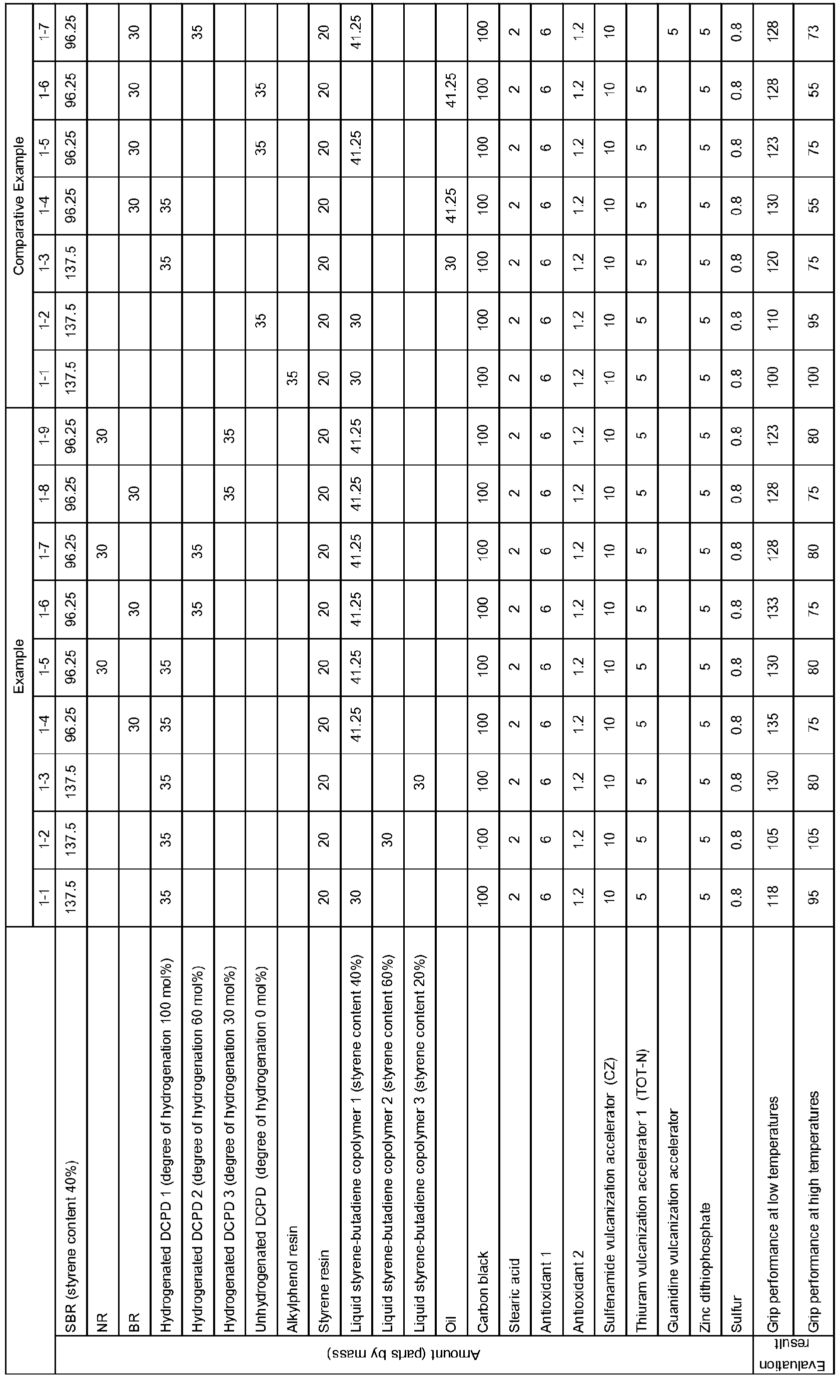

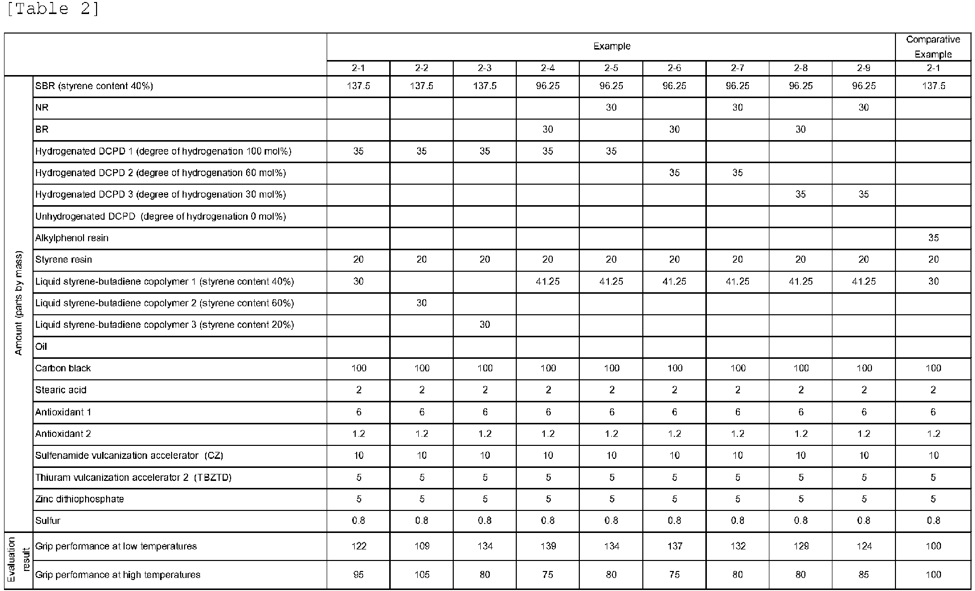

Tables 1 and 2 show that the overall performance in terms of grip performance at low temperatures and grip performance at high temperatures (expressed by the sum of the two indexes of grip performance at low temperatures and grip performance at high temperatures) was improved in the examples containing a liquid styrene-butadiene copolymer, a hydrogenated dicyclopentadiene resin, and a thiuram vulcanization accelerator.

Comparisons between Comparative Examples 1-4 to 1-6 and Example 1-4 reveal that the overall performance in terms of grip performance at low temperatures and grip performance at high temperatures was synergistically improved by the use of a combination of a liquid styrene-butadiene copolymer and a hydrogenated dicyclopentadiene resin in a composition containing a thiuram vulcanization accelerator.

## Claims

1. A tire, comprising a tread comprising a tire rubber composition, the rubber composition comprising:
at least one liquid styrene-butadiene copolymer;
at least one hydrogenated dicyclopentadiene resin; and
at least one thiuram vulcanization accelerator.

2. The tire according to claim 1,
wherein the hydrogenated dicyclopentadiene resin has a degree of hydrogenation of 50 mol% or higher.

3. The tire according to claim 1 or 2,
wherein the rubber composition comprises at least one styrene-butadiene rubber, and at least one isoprene-based rubber and/or polybutadiene rubber.

4. The tire according to any one of claims 1 to 3,
wherein the rubber composition comprises at least one styrene resin.

5. The tire according to any one of claims 1 to 4,
wherein the rubber composition comprises, per 100 parts by mass of at least one rubber component therein, 30 parts by mass or more of at least one carbon black.

## Patentansprüche

1. Reifen, umfassend einen Laufstreifen, der eine Reifenkautschukzusammensetzung umfasst, wobei die Kautschukzusammensetzung umfasst:
mindestens ein flüssiges Styrol-Butadien-Copolymer;
mindestens ein hydriertes Dicyclopentadien-Harz; und
mindestens einen Thiuram-Vulkanisationsbeschleuniger.

2. Reifen nach Anspruch 1,
wobei das hydrierte Dicyclopentadien-Harz einen Hydrierungsgrad von 50 Molprozent oder höher aufweist.

3. Reifen nach Anspruch 1 oder 2,
wobei die Kautschukzusammensetzung mindestens einen Styrol-Butadien-Kautschuk, und mindestens einen Isopren-basierten Kautschuk und/oder Polybutadien-Kautschuk umfasst.

4. Reifen nach einem der Ansprüche 1 bis 3,
wobei die Kautschukzusammensetzung mindestens ein Styrolharz umfasst.

5. Reifen nach einem der Ansprüche 1 bis 4,
wobei die Kautschukzusammensetzung, pro 100 Massenteile mindestens einer Kautschukkomponente darin, 30 Massenteile oder mehr mindestens eines Rußes umfasst.

## Revendications

1. Pneu, comprenant une bande de roulement comprenant une composition de caoutchouc pour pneu, la composition de caoutchouc comprenant :
au moins un copolymère de styrène-butadiène liquide ;
au moins une résine de dicyclopentadiène hydrogénée, et
au moins un accélérateur de vulcanisation au thiurame.

2. Pneu selon la revendication 1,
dans lequel la résine de dicyclopentadiène hydrogénée a un degré d'hydrogénation de 50 % en moles ou plus.

3. Pneu selon la revendication 1 ou 2,
dans lequel la composition de caoutchouc comprend au moins un caoutchouc de styrène-butadiène et au moins un caoutchouc à base d'isoprène et/ou caoutchouc de polybutadiène.

4. Pneu selon l'une quelconque des revendications 1 à 3,
dans lequel la composition de caoutchouc comprend au moins une résine de styrène.

5. Pneu selon l'une quelconque des revendications 1 à 4,
dans lequel la composition de caoutchouc comprend, par 100 parties en masse d'au moins un composant de caoutchouc à l'intérieur, 30 parties en masse ou plus d'au moins un noir de charbon.
